# EUROPEAN PATENT APPLICATION

(11) **EP 1 777 262 A1**
(43) Date of publication of application: **25.04.2007**
(21) Application number: 06122583.5
(22) Date of filing: 19.10.2006
(51) Int. Cl.: C08L 55/02, C08L 51/04, C01B 31/00, C08K 3/04, C08F 279/04, C08F 279/02, C08L 53/00

(54) **Carbon nanotubes reinforced thermoplastic molding compositions and production process therefor**

(30) Priority: 24.10.2005 EP 05023141
(71) Applicant: BASF Aktiengesellschaft, 67056 Ludwigshafen (DE)
(72) Inventor: DUIJZINGS, Wil, 6121 JL, Born (NL); SUWIER, Davy, Roger, 68161, Mannheim (DE); BREINER, Thomas, 64646, Heppenheim (DE); WARZELHAN, Volker, 67273, Weisenheim (DE); NIEßNER, Norbert, 67159, Friedelsheim (DE); PEPERS, Michel, 67071, Ludwigshafen (DE)
(74) Representative: Isenbruck, Günter

(57) **Abstract**

The invention relates to a carbon nanotube reinforced thermoplastic molding composition. This thermoplastic molding composition is produced from a graft copolymer containing single wall carbon nanotubes and a thermoplastic polymer. The graft copolymer is produced from a soft elastomeric particulate graft base with a glass transition temperature below 0°C obtained by emulsion polymerization of a conjugated diene alone or with a small amount of a monoethylenically unsaturated monomer or of at least one C₁-C₁₈-alkyl acrylate, or of mixtures of these, upon which is grafted a vinyl aromatic monomer and acrylonitrile and optionally another monoethylenically unsaturated monomer.

The synthesis of the aqueous latex of the graft copolymer is performed in the presence of a dispersion of carbon nanotubes (CNTs) in an aqueous medium. For the dispersing step of the carbon nanotubes (CNTs) in aqueous solution, a salt of an amphiphilic polymer is used.

## Description

The invention relates to a carbon nanotubes reinforced thermoplastic molding composition, a process for the production thereof and its use for the production of shaped articles.

Carbon nanotubes (CNTs) are self-assembled coaxial cylindrical graphene sheets of SP² hybridized carbon atoms. Due to their tubular structure, large aspect ratio (length vs. diameter, AR) and electrical conductance, they have interesting mechanical and electronic properties.

There are two types of CNTs, multi-walled carbon nanotubes (MWCNTs) and single-walled carbon nanotubes (SWCNTs).

In recent years, much effort has been put into the incorporation of CNTs in polymer matrices. The composites obtained are interesting materials, since they have enhanced electrical and mechanical properties at very low loading due to the specific nanotube characteristics, such as their high aspect ratio and electrical conductance. However, dispersion of CNTs in highly viscous polymers is difficult and has often been attempted by functionalizing the nanotubes, leading to attractive interactions between the nanotubes and the polymer. In addition, dispersing exfoliated single nanotubes has been found to be a challenge, since nanotubes are highly bundled as a result of strong vander-Waals interactions.

CNT reinforced polymers are presently made by incorporating CNTs, generally in the form of a bundle, into a polymer matrix. In order to obtain a homogeneous distribution of these CNTs, they are pre-treated by either an ultrasonic treatment, or by a chemical modification process, aimed at improving the dispersability of the individual CNT in the polymer matrix (WO 2004/046031).

The incorporation of CNTs in such a polymeric matrix is for the enhancement of the stiffness as well as the conductivity of the polymer matrix material. The reported procedures for obtaining homogeneous dispersions of CNTs in polymer matrices may result in either breaking and lowering of the aspect ratio of the tubes (which is unfavorable for stiffness, strength, and conductivity of the composite), or in damaging the surface of the tubes (which lowers the stability and the conductivity of the tubes).

In J. Mater. Sci. 37 (2002) 3915-23, a process is described for the preparation of a poly (styrene/butyl acrylate) copolymer nano composite using CNTs as filler. This process uses MWCNTs, suspended in an aqueous solution of sodium dodecyl sulphate (SDS), and a latex of the copolymer. An amount of at least 3 wt.% of the MWCNT is needed to have a significant change in the electrical conductivity of the nanocomposite (the socalled percolation threshold).

In WO 2002/076888, a method for the exfoliation of CNTs and a method for the preparation of a stable aqueous suspension thereof by adding a water soluble polymer, such as gum Arabic, carrageenan, pectin, polygalacturonic acid, alginic acid and chitosan, is disclosed. In this document it also disclosed that other surfactants, such as cetyl trimethyl ammonium chloride, dodecyltrimethylammonium bromide, penta oxyethylene dodecylether, dextrine, polyethylene oxide (MW about 300,000) are not efficient as dispersing agents for CNTs in aqueous solutions.

In WO 2004/072159, a process for preparing a CNT reinforced polymer is disclosed, which comprises the step of contacting CNTs in an aqueous medium with either a water soluble polymer or a water soluble surfactant.

Although good results have been achieved with the cited processes, there is still room for substantial improvements.

Since SWCNTs are very expensive, there is need for further lowering of the perconation threshold. Further, it is of advantage if in one dispersion step all the nanotubes can be dispersed, so the separation of non dispersed bundles by a centrifuging step can be omitted.

Further, adding of surfactants or low molecular weight water soluble polymers results in a decrease of the glass transition temperature of the polymer composite. Since most systems are in the class of engineering plastics, this is potentially a substantial disadvantage.

WO2004/001107 describes in one embodiment a method for producing SWCNT-filled composites using an in situ polymerization process comprising the steps of: combining single-walled carbon nanotubes with a monomer in the presence or absence of a polymerization catalyst; activating the polymerization catalyst if needed; exposing the mixture to polymerization conditions thereby resulting in a polymer mixture having the single-walled carbon nanotubes highly dispersed therein; thereby forming the single-walled carbon nanotube-filled composite. In an alternative embodiment, the invention contemplates a method for producing a single-walled carbon nanotube-filled polymer composite (SWCNT-filled composite) produced by a miniemulsion process comprising the steps of: combining SWCNTs with an aqueous surfactant thereby forming a surfactant-nanotube mixture and forming a surfactant-nanotube dispersion there from; combining a polymerization initiator with the surfactant-nanotube dispersion thereby forming a surfactant-nanotube-initiator mixture and treating the surfactant-nanotube-initiator mixture to form aggregates wherein the nanotubes are highly dispersed within the surfactant-nanotube-initiator mixture; combining a monomer with a hydrophobe to form a monomer-hydrophobe mixture, and adding a polymerization catalyst thereby forming a monomer-hydrophobe-polymerization catalyst mixture; combining the surfactant-nanotube-initiator mixture with the monomer-hydrophobe-polymerization catalyst mixture thereby forming a monomer-nanotube mixture; and mixing the monomer-nanotube mixture under miniemulsion conditions for a predetermined duration forming a monomer-nanotube miniemulsion wherein polymerization occurs, thereby resulting in a polymer mixture having the single-walled carbon nanotubes highly dispersed therein, forming the single-walled carbon nanotubes highly dispersed therein, forming the single-walled carbon nanotube-filled composite.

Disadvantages of the sophisticated technique of mini-emulsion polymerization are the fact that large quantities of auxiliaries are needed resulting in excessive labor for work up and recirculation to prevent environmental pollution. Furthermore, probably to the high loads of auxiliaries the building of the SWCNT network is not optimal resulting in reported percolation values at a content of about 8% SWCT.

It is an object of the invention to avoid or reduce these disadvantages of the known CNT-reinforced polymers.

It has been found that CNT-reinforced polymers with excellent properties can be obtained by adding a salt of an amphiphilic polymer to the aqueous medium in the dispersing step of the CNTs and performing a simple (graft) polymerization in the presence of the well dispersed SWCNTs. This process leads to thermoplastic polymers with a very low percolation value of < 1%.

Accordingly, in one aspect of the invention there is provided a CNT reinforced thermoplastic molding composition (G), comprising components (A) to (F)
A) from 5% to 80% by weight of a mixture of
   A1) from 0.01 to 50% by weight (based on (A)) of a mixture of
      a1) 4.75 to 95.25% by weight (based on (A1)) of CNTs, and
      a2) 95.25 to 4.75% by weight (based on (A1)) of a water soluble amphiphilic polymer,
      and
   A2) from 50 to 99.9% by weight (based on (A)) of a graft polymer (A2) having bimodal particle size distribution made from, based on (A2)
      a3) from 40 to 90% by weight of an elastomeric particulate graft base (a3), obtained by polymerization of, based on (a3),
         a31) from 70 to 100% by weight of at least one conjugated diene, or of at least one C₁-C₈-alkyl acrylate, or of a mixture of these,
         a32) from 0 to 30% by weight of at least one other monoethylenically unsaturated monomer and
         a33) from 0 to 10% by weight of at least one polyfunctional, cross linking monomer;
      a4) from 10 to 60% by weight of a graft (a4) made from, based on (a4),
         a41) from 65 to 95% by weight of at least one vinyl aromatic monomer,
         a42) from 5 to 35% by weight of acrylonitrile,
         a43) from 0 to 30% by weight of at least one monoethylenically unsaturated monomer, and
         a44) from 0 to 10% by weight of at least one polyfunctional, cross linking monomer;
B) from 20 to 95% by weight of a thermoplastic polymer (B) having a viscosity number VN of from 50 to 120 ml/g, made from, based on (B),
   b1) from 64 to 81 % by weight of at least one vinyl aromatic monomer,
   b2) from 19 to 36% by weight of acrylonitrile, and
   b3) from 0 to 30% by weight of at least one other monoethylenically unsaturated monomer;
(C) from 0 to 50% by weight of a thermoplastic polymer (C) having a viscosity number VN of from 50 to 120 ml/g made from, based on (C),
   c1) from 62 to 81 % by weight of at least one vinyl aromatic monomer,
   c2) from 19 to 38% by weight of acrylonitrile and
   c3) from 0 to 30% by weight of at least one other monoethylenically unsaturated monomer,
   where components (B) and (C) differ in their viscosity numbers VN by at least 5 units (ml/g), or in their acrylonitrile content by at least 5 units (% by weight) or in both characteristics, viscosity number VN and acrylonitrile content, by at least 5 units and
(D) from 0 to 50% by weight of a thermoplastic polymer (D) made from, based on (D),
   d1) from 4 to 96% by weight of at least one vinyl aromatic monomer,
   d2) from 4 to 96% by weight of at least one monomer from the group consisting of methyl methacrylate, maleic anhydride and maleimides, and
   d3) from 0 to 50% by weight of acrylonitrile where (D) is different from (B) and (C) if present;
E) from 0 to 80% by weight of amorphous or (semi)-crystalline polymers like polycondensation products, for example aromatic polycarbonates, aromatic polyester carbonates, polyesters, polyamides, as the rubber-free copolymer in the molding compositions according to the invention;
F) from 0 to 50% by weight of additives (F).

The molding composition (G) shows excellent mechanical properties, a low conductivity percolation threshold and a low resistivity.

In a further aspect of the invention there is provided a process for producing the above described CNT reinforced thermoplastic molding composition (G), comprising the steps of
I. preparing an aqueous dispersion of (A1) by contacting CNTs in an aqueous medium with a water soluble salt of an amphiphilic polymer;
II. obtaining component (A) by preparing an aqueous latex of a graft polymer (A2) having a bimodal size distribution and comprising (based on the total weight of A2):
   40 to 90% of a graft base (a3) and
   10 to 60% by weight of a graft (a4)
      by
      i. emulsion-polymerizing, based on the total weight of (a3)
         a31) from 70 to 100% by weight of at least one conjugated diene, or of at least one C₁-C₈-alkyl acrylate, or of a mixture of these,
         a32) from 0 to 30% by weight of at least one other monoethylenically unsaturated monomer and
         a33) from 0 to 10% by weight of at least one polyfunctional, cross linking monomer, and
      ii. graft copolymerizing in the presence of (a3)
         a41) from 65 to 95% by weight (based on (a4) of one or more vinyl aromatic monomer,
         a42) from 5 to 35% by weight of acrylonitrile,
         a43) from 0 to 30% by weight of at least one other monoethylenically unsaturated monomer, and
         a44) from 0 to 10% by weight of at least one polyfunctional, cross linking monomer;
      where either step (i) or step (ii) or both are carried out in the presence of the aqueous dispersion of (A1); and
III. mixing 5 to 95% by weight (based on the total (G) of (A) with
   B) from 20 to 95% by weight (based on the total TMC) of a thermoplastic polymer (B) having a viscosity number VN of from 50 to 120 ml/g, made from, based on (B),
      b1) 69 to 81 % by weight of at least one vinyl aromatic monomer,
      b2) 19 to 31 % by weight of acrylonitrile, and
      b3) 0 to 30% by weight of at least one other monoethylenically unsaturated monomer, and
   optionally further thermoplastic polymers (C) to (E) and/or additives (F).

In another aspect of the invention there is provided a CNT reinforced molding composition, obtainable by the above process.

In further aspects of the invention there is provided the use of the composition (G) for producing molds, and molds obtained from the composition (G).

Suitable CNTs employed in the present invention are, e.g., commercial products which can be obtained, e.g., as HiPCO^{®} from Carbon Nanotechnologies, Inc. (Houston, USA) or Carbolex^{®} from CarboLex, Inc. (Lexington, KY, USA). In general, they can be used without further preparation or purification. Single walled CNTs (SWCNTs) are preferred.

The expression "amphiphilic polymer" as used herein means a polymer or oligomer comprising hydrophobic and hydrophilic segments and acting as a surfactant, i.e. lowering the surface tension of water. The amphiphilic polymer comprises one or more groups which are able to form a salt in an aqueous medium.

The amphiphilic polymer can be anionic, cationic or amphoteric.

Water solubility as used herein means that the salt of the amphiphilic polymer is soluble in the reaction medium. Preferably, water solubility means a solubility of at least 1 g/l, more preferred 10 g/l, in particular 50 g/l at 25°C.

In a preferred embodiment, the amphiphilic polymer is at least partially, more preferred homogeneously, miscible with the graft polymer (A2).

In a further preferred embodiment, the amphiphilic polymer is a linear polymer, i.e. it is not branched or crosslinked.

In a further preferred embodiment, the amphiphilic polymer is a synthetic polymer, more preferred a synthetic polymer obtained from hydrophobic and hydrophilic monomers.

In a further preferred embodiment, the amphiphilic polymer is a copolymer, for example an alternating or random copolymer or block copolymer, which can be prepared by known polymerization reactions, for example by radical or anionic polymerization, by polycondensation reactions, such as by reaction of end-functionalized oligomeric or comb polymers, which polymers may be prepared e.g. by graft reaction. Block polymers are, for example, diblock copolymers (A-B type) or triblock copolymers (A-B-A or A-B-C type) and so called tapered structures.

Preferred examples of building blocks for the amphiphilic polymer are:
vinyl aromatic monomers, such as styrene and styrene derivatives of the formula (I), 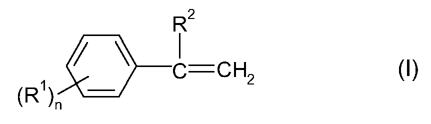 where R¹ and R² are, independently, hydrogen or C₁-C₈-alkyl and n is 0, 1, 2 or 3;
methacrylonitrile, acrylonitrile;
nitrogen-functional monomers, such as dimethylaminoethyl acrylate, diethylaminoethyl acrylate, vinylimidazole, vinylpyrrolidone, vinylcaprolactam, vinylcarbazole, vinyl aniline, acryl amide;
C₁-C₁₀-alkylacrylates, such as methyl acrylate, ethyl acrylate, n-propyl acrylate, isopropyl acrylate, n-butyl acrylate, isobutyl acrylate, sec-butyl acrylate, tert-butyl acrylate, ethylhexyl acrylate, and the corresponding C₁-C₁₀-alkyl methacrylates, and hydroxyethyl acrylate;
aromatic and araliphatic (meth)acrylates, such as phenyl acrylate, phenyl methacrylate, benzyl acrylate, benzyl methacrylate, 2-phenylethyl acrylate, 2-phenylethyl methacrylate, 2-phenoxyethyl acrylate and 2-phenoxyethyl methacrylate;
N-substituted maleimides, such as N-methyl-, N-phenyl- and N-Cyclohexylmaleimide;
unsaturated ethers, such as vinyl methyl ether, and
acrylic acid, methacrylic acid, and also dicarboxylic acids, such as maleic acid and fumaric acid and their anhydrides, such as maleic anhydride.

A water soluble salt of these polymers can for example be prepared by saponification of the above mentioned polymers with basic compounds. Preferred are monovalent salts, like the Na, K, Li and NH₄ salts with NH₄ salts being particularly preferred. Also mixtures are possible. The saponification can for example be carried out with NaOH, KOH, LiOH or NH₄OH.

In a preferred embodiment, the salt of the amphiphilic polymer is the salt of an alternating styrene maleic anhydride (SMA) copolymer, the ammonium salt being particularly preferred.

Preferably, the water soluble salt of the amphiphilic polymer has a molecular weight (Mw) of at least 1,000, more preferred at least 5,000, particularly preferred at least 10,000. For practical purposes, the upper limit is generally 150,000, preferably 75,000, more preferred 50,000.

Step (I) of the process according to the invention is performed by contacting the essential ingredients (the water soluble salt of the amphiphilic polymer and the CNTs) in any order in water or an aqueous solution.

The resulting product generally contains up to 75% by weight of CNTs, coated with the said water-soluble salt of the amphiphilic polymer. In this process step (I), the mass ratio of the water soluble salt of the amphiphilic polymer to the CNTs is preferably in the range of from 0.05 to 20.

The temperature at which this step (I) is performed is not critical, e.g., temperatures between room temperature and 75°C are very well suited.

The residence time needed for an effective exfoliation of the CNTs can be easily determined by a man skilled in the art. Residence times below one hour have proven to be sufficient for that purpose.

As a result of process step (I), the CNTs are well dispersed in the aqueous medium. Well dispersed in the aqueous medium means that the CNTs are substantially homogeneously distributed (i.e., allowing for 1 to 20 percent, preferably 1 to 5 percent inhomogeniety in the aqueous medium without phase separation. Preferably, about 60%, more preferably about 80%, most preferably about 90% of the well-dispersed CNTs are not bundled together.

The preparation of the graft polymer (A2) by emulsion polymerization is carried out in the presence of the aqueous dispersion of (A1).

Either the preparation of the graft base (a3), or the graft (a4) or both can be carried out in the presence of the dispersion of (A1).

As a result of the presence of the aqueous dispersion of the SWCNTs (A1) in the emulsion polymerization, where component (A2) is formed, the SWCNTs are particularly well dispersed in the resulting component (A).

The graft base (a3) is present in a proportion of from 40 to 90% by weight, preferably from 45 to 85% by weight, and particularly preferably from 50 to 80% by weight, based on component (A2).

The graft base (a1) is obtained by polymerizing, based on (a1),
a31) from 70 to 100% by weight, preferably from 75 to 100% by weight, and particularly preferably from 80 to 100% by weight, of at least one conjugated diene, or of at least one C₁-C₈-alkyl acrylate, or a mixture of these, and
a32) from 0 to 30% by weight, preferably from 0 to 25% by weight, and particularly preferably from 0 to 20% by weight, of at least one other monoethylenically unsaturated monomer.

Examples of conjugated dienes (a31) are butadiene, isoprene, chloroprene and mixtures of these. Preference is given to the use of butadiene or isoprene or mixtures of these, and butadiene is particularly preferred.

Examples of C₁₋₈-alkyl acrylate (a31) are n-butyl acrylate and/or ethylhexyl acrylate, n-butylacrylate is particularly preferred.

Constituent (a3) of the molding compositions may also contain, with corresponding reduction in the monomers (a31), other monomers (a32) which vary the mechanical and thermal properties of the core within a certain range. Examples of such monoethylenically unsaturated comonomers are:
vinylaromatic monomers, such as styrene and styrene derivatives of the formula (I), 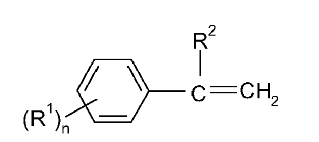 where R¹ and R² are hydrogen or C₁-C₈-alkyl and n is 0, 1, 2 or 3;
methacrylonitrile, acrylonitrile;
acrylic acid, methacrylic acid, and also dicarboxylic acids, such as maleic acid and fumaric acid and their anhydrides, such as maleic anhydride;
nitrogen-functional monomers, such as dimethylaminoethyl acrylate, diethylaminoethyl acrylate, vinylimidazole, vinylpyrrolidone, vinylcaprolactam, vinylcarbazole, vinylaniline, acrylamide;
C₁-C₁₀-alkylacrylates, such as methyl acrylate, ethyl acrylate, n-propyl acrylate, isopropyl acrylat, n-butyl acrylate, isobutyl acrylate, sec-butyl acrylate, tert-butyl acrylate, ethylhexyl acrylate, and the corresponding C₁-C₁₀-alkyl methacrylates, and hydroxyethyl acrylate;
aromatic and araliphatic (meth)acrylates, such as phenyl acrylate, phenyl methacrylate, benzyl acrylate, benzyl methacrylate, 2-phenylethyl acrylate, 2-phenylethyl methacrylate, 2-phenoxyethyl acrylate and 2-phenoxyethyl methacrylate;
N-substituted maleimides, such as N-methyl-, N-phenyl- and N-cyclohexylmaleimide;
unsaturated ethers, such as vinyl methyl ether
and mixtures of these monomers.

Preferred monomers (a32) are styrene, α-methylstyrene, n-butyl acrylate or mixtures of these, styrene and n-butyl acrylate or mixtures of these being particularly preferred and styrene being very particularly preferred. Styrene or n-butyl acrylate or mixtures of these are preferably used in amounts of, in total, up to 20% by weight, based on (a1).

In principle, any cross linking monomer can be used as component (a33). Examples of polyfunctional cross linking monomers are divinylbenzene, diallyl maleate, diallyl fumarate, diallyl phthalate, diethyl phthalate, triallyl cyanurate, triallyl isocyanurate, tricyclodecenyl acrylate, dihydrodicyclopentadienyl acrylate, triallyl phosphate, allyl acrylate, and allyl methacrylate.

Dicyclopentadienyl acrylate (DCPA) has proven to be a particularly useful cross linking monomer.

In a particular embodiment, use is made of a graft base made from, based on (a3),
a31) from 70 to 99.9, preferably from 90 to 99% by weight, of butadiene, and
a32) from 0.1 to 30, preferably from 1 to 10% by weight, of styrene.

The graft (a4) is present in a proportion of from 10 to 60% by weight, preferably from 15 to 55% by weight, and particularly preferably from 20 to 50% by weight, based on component (A2).

The graft (a4) is obtained by polymerizing, based on (a4),
a41) from 65 to 95% by weight, preferably from 70 to 90% by weight, and particularly preferably from 75 to 85% by weight, of at least one vinylaromatic monomer,
a42) from 5 to 35% by weight, preferably from 10 to 30% by weight, and particularly preferably from 15 to 25% by weight of acrylonitrile,
a43) from 0 to 30% by weight, preferably from 0 to 20% by weight, and particularly preferably to 0 to 15% by weight, of at least one further monoethylenically unsaturated monomer, and
a44) from 0 to 10% by weight of at least one polyfunctional, cross linking monomer.

Examples of vinylaromatic monomers (a21) can be styrene and styrene derivatives of the formula (I), 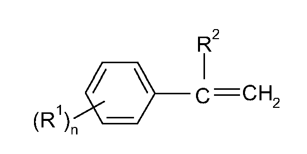 where R¹ and R² are hydrogen or C₁-C₈-alkyl and n is 0, 1, 2 or 3. Preference is given to the use of styrene, α-methyl styrene or mixtures thereof. Particularly preferred is styrene.

Examples of other monomers (a43) are the monomers given above for component (a32). Methyl methacrylate and acrylates, such as n-butyl acrylate, are particularly suitable. Methyl methacrylate (MMA) is very particularly suitable as monomer a43), an amount of up to 20% by weight of MMA, based on (a4), being preferred.

In principle, any cross linking monomer can be used as component (a24). Examples of polyfunctional cross linking monomers are divinylbenzene, diallyl maleate, diallyl fumarate, diallyl phthalate, diethyl phthalate, triallyl cyanurate, triallyl isocyanurate, tricyclodecenyl acrylate, dihydrodicyclopentadienyl acrylate, triallyl phosphate, allyl acrylate, and allyl methacrylate. Dicyclopentadienyl acrylate (DCPA) has proven to be a particularly useful cross linking monomer.

The graft polymers are prepared by emulsion polymerization, usually at from 20 to 100°C, preferably from 30 to 80°C. Additional use is usually made of customary emulsifiers, for example alkali metal salts of alkyl- or alkylarylsulfonic acids, alkyl sulfates, fatty alcohol sulfonates, salts of higher fatty acids having from 10 to 30 carbon atoms, sulfosuccinates, ether sulfonates or resin soaps. It is preferable to use the alkali metal salts, in particular the Na and K salts, of alkylsulfonates or fatty acids having from 10 to 18 carbon atoms.

The emulsifiers are generally used in amounts of from 0.5 to 5% by weight, in particular from 0.5 to 3% by weight, based on the monomers used in preparing the graft base (a3).

In preparing the dispersion, it is preferable to use sufficient water to give the finished dispersion a solids content of from 20 to 50% by weight. A water/monomer ratio of from 2:1 to 0.7:1 is usually used.

Polymerization is generally carried out in the presence of a radical generating substance.

Suitable free-radical generators for initiating the polymerization are those which decompose at the selected reaction temperature, i.e. both those which decompose by themselves and those which do so in the presence of a redox system. Examples of preferred polymerization initiators are free-radical generators, such as peroxides, preferably peroxidisulfates (such as sodium or potassium) and azo compounds, such as azodiisobutyronitrile. It is also possible, however, to use redox systems, especially those based on hydroperoxides, such as cumene hydroperoxide.

The polymerization initiators are generally used in amounts of from 0.1 to 1% by weight, based on the graft base monomers (a31) and (a32).

In a preferred embodiment, the free-radical initiators are inorganic peroxides, more preferred peroxidisulfates (in particular sodium, potassium or ammonium peroxidisulfate).

In this preferred embodiment - to reduce the formation of odor generating substances - the use of azo compounds, such as azodiisobutyronitrile, or redox systems based on organic peroxides and/or hydroperoxides, such as cumene hydroperoxides, is excluded.

Generally, the polymerization initiators are used in a concentration of from 0.1 to 2% by weight, based on monomers (a3).

The free-radical generators and also the emulsifiers are added to the reaction mixture, for example, batchwise as a total amount at the beginning of the reaction or in stages, divided into a number of portions, at the beginning and at one or more later times, or continuously over a defined period. Continuous addition may also follow a gradient, which may, for example, rise or fall and be linear or exponential or even a step function.

It is also possible to include in the reaction molecular weight regulators, such as ethylhexyl thioglycolate, n-dodecyl or t-dodecyl mercaptane or other mercaptans, terpinols and dimeric α-methylstyrene or other compounds suitable for regulating molecular weight. The molecular weight regulators may be added to the reaction mixture batchwise or continuously, as described above for the free-radical generators and emulsifiers.

In a preferred embodiment, use is made of one or more chain transfer agents (molecular weight regulators) containing a mercapto group, such as alkyl mercaptanes, preferably (C₆-C₂₀)alkyl mercaptanes, such as n-dodecyl mercaptane and t-dodecyl mercaptane, or thioglycolates, such as esters or salts of thiogycolic acid, e.g. 2-ethyl-hexyl thioglycolate. The use of n- or t-dodecyl mercaptane is particularly preferred.

In the preferred embodiment, the amount of the chain transfer agents is > 0.5 and < 1.2, more preferred > 0.6 and <1.0 and most preferred > 0.7 and < 0.9% by weight based on monomers (a1).

To maintain a constant pH, preferably of from 6 to 9, it is possible for the reaction to include buffer substances such as Na₂HPO₄/NaH₂PO₄, sodium hydrogen carbonate or buffers based on citric acid/citrate. Regulators and buffer substances are used in the customary amounts, and further details on this point are, therefore, well known to those skilled in the art.

In a particularly preferred embodiment, a reductant is added during the grafting of the graft base (a1) with the monomers (a41) to (a43).

In particular, it is possible to prepare the graft base by polymerizing the monomers (a3) in the presence of a finely divided latex (the seed latex method of polymerization). This latex is the initial charge and may be made from monomers which form elastomeric polymers or else from other monomers mentioned above. Suitable seed latices are made from, for example, polybutadiene or polystyrene.

In another preferred embodiment, the graft base (a3) is prepared by the feed method. In this process, the polymerization is initiated using a certain proportion of the monomers (a3), and the remainder of the monomers (a1) (the feed portion) is added as feed during the polymerization. The feed parameters (gradient shape, amount, duration, etc.) depend on the other polymerization conditions. The principles of the descriptions given in connection with the method of addition of the free-radical initiator and/or emulsifier are once again relevant here. In the feed process, the proportion of the monomers (a3) in the initial charge is preferably from 5 to 50% by weight, particularly preferably from 8 to 40% by weight, based on (a1). The feed portion of (a3) is preferably fed in within a period of from 1 to 18 hours, in particular from 2 to 16 hours, very particularly from 4 to 12 hours.

Graft polymers having a number of "soft" and "hard" shells, e.g. of the structure (a3)-(a4)-(a3)-(a4) or (a4)-(a3)-(a4), are also suitable, especially where the particles are of relatively large size.

The precise polymerization conditions, in particular the type, amount and method of addition of the emulsifier and of the other polymerization auxiliaries are preferably selected so that the resultant latex of the graft polymer (A2) has a mean particle size, defined by the d₅₀ of the particle size distribution, of from 80 to 800, preferably from 80 to 600 and particularly preferably from 85 to 400.

The reaction conditions are preferably balanced so that the polymer particles have a bimodal particle size distribution, i.e. a particle size distribution having two maxima whose distinctness may vary. The first maximum is more distinct (peak comparatively narrow) than the second and is generally at from 25 to 200 nm, preferably from 60 to 170 nm and particularly preferably from 70 to 150 nm. The second maximum is broader in comparison and is generally at from 150 to 800 nm, preferably from 180 to 700, particularly preferably from 200 to 600 nm. The second maximum here (from 150 to 800 nm) is at larger particle sizes than the first maximum (from 25 to 200 nm).

The bimodal particle size distribution is preferably achieved by (partial) agglomeration of the polymer particles. This can be achieved, for example, by the following procedure: the monomers (a1), which form the core, are polymerized to a conversion of usually at least 90%, preferably greater than 95%, based on the monomers used. This conversion is generally achieved in from 4 to 20 hours. The resultant rubber latex has a mean particle size d₅₀ of not more than 200 nm and a narrow particle size distribution (virtually monodisperse system).

In the second step, the rubber latex is agglomerated. This is generally done by adding a dispersion of an acrylate polymer. Preference is given to the use of dispersions of copolymers of C₁-C₄-alkyl acrylates, preferably of ethyl acrylate, with from 0.1 to 10% by weight of monomers which form polar polymers, examples being acrylic acid, methacrylic acid, acrylamide, methacrylamide, N-methylol methacrylamide and N-vinylpyrrolidone. Particular preference is given to a copolymer of 96% of ethyl acrylate and 4% of methacrylamide. The agglomerating dispersion may, if desired, also contain more than one of the acrylate polymers mentioned.

In general, the concentration of the acrylate polymers in the dispersion used for agglomeration should be from 3 to 40% by weight. For the agglomeration, from 0.2 to 20 parts by weight, preferably from 1 to 5 parts by weight, of the agglomerating dispersion are used for each 100 parts of the rubber latex, the calculation in each case being based on solids. The agglomeration is carried out by adding the agglomerating dispersion to the rubber. The addition rate is usually not critical, and the addition usually takes from 1 to 30 minutes at from 20 to 90°C, preferably from 30 to 75°C.

Beside an acrylate polymer dispersion, use may also be made of other agglomerating agents, such as acetic anhydride, for agglomerating the rubber latex. Agglomeration by pressure or freezing is also possible. The methods mentioned are known to the person skilled in the art.

Under the conditions mentioned, the rubber latex is only partially agglomerated, giving a bimodal distribution. More than 50%, preferably from 75 to 95%, of the particles (distribution by number) are generally in the non-agglomerated state after the agglomeration. The resultant partially agglomerated rubber latex is relatively stable, and it is therefore easy to store and transport it without coagulation occurring.

To achieve a bimodal particle size distribution of the graft polymer (A2), it is also possible to prepare, separately from one another in the usual manner, two different graft polymers (A2') and (A2") differing in their mean particle size, and to mix the graft polymers (A2') and (A2") in the desired mixing ratio.

The polymerization of the graft base (a3) is usually carried out with reaction conditions selected to give a graft base having a particular cross linked nature. Examples of parameters which are important for this are the reaction temperature and duration, the ratio of monomers, regulator, free-radical initiator and, for example in the feed process, the feed rate and the amount and timing of addition of regulator and initiator.

One method for describing the cross linked nature of cross linked polymer particles is measurement of the swelling index Ql, which is a measure of the solvent-swellability of a polymer having some degree of cross linking. Examples of customary swelling agents are methyl ethyl ketone and toluene. The Ql of the novel molding compositions is usually in the range of from 10 to 60, preferably from 15 to 55 and particularly preferably from 20 to 50.

Another method for describing the extent of cross linking is the measurement of T₂ times, the NMR relaxation times of protons capable of movement. The more strongly cross linked a particular network is, the lower its T₂ times are. Customary T₂ times for the graft bases (a3) according to the invention are in the range from 2.0 to 4.5 ms, preferably from 2.5 to 4.0 ms and particularly preferably from 2.5 to 3.8 ms, measured at 80°C on specimens in film form.

Gel content is another criterion for describing the graft base and its extent of cross linking, and is the proportion of material which is cross linked and therefore insoluble in a particular solvent. It is useful to determine the gel content in the solvent also used for determining the swelling index. Gel contents of the graft bases (a3) according to the invention are usually in the range from 50 to 90%, preferably from 55 to 85% and particularly preferably from 60 to 80%.

The following method may, for example, be used to determine the swelling index: about 0.2 g of the solid from a graft base dispersion converted to a film by evaporating the water is swollen in a sufficient quantity (e.g. 50 g) of toluene. After, for example, 24 h, the toluene is removed with suction and the specimen is weighed. The weighing is repeated after the specimen has been dried in vacuo. The swelling index is the ratio of the specimen weight after the swelling procedure to the dry specimen weight after the second drying. The gel content is calculated correspondingly from the ratio of the dry weight after the swelling step to the weight of the specimen before the swelling step (x100%)

The T₂ time is determined by measuring the NMR relaxation of a specimen of the graft base dispersion from which water has been removed and which has been converted into a film. For this, the specimen is, for example, dried in air overnight, at 60°C for 3 h in vacuo and then studied at 80°C using a suitable measuring apparatus, e.g. Bruker minispec. It is only possible to compare specimens studied by the same method, since the relaxation is markedly temperature-dependent.

The graft (a4) may be prepared under the same conditions as those used for preparation of the graft base (a3) and may be prepared in one or more process steps, for example in two steps of different monomer make up. In two-stage grafting, for example, it is possible to polymerize styrene and/or α-methylstyrene alone, and then styrene and acrylonitrile, in two sequential steps. This two-step grafting (firstly styrene, then styrene/acrylonitrile) is a preferred embodiment. Further details concerning the preparation of the graft polymers (A2) are given in DE-OS 12 60 135 and 31 49 358.

It is advantageous in turn to carry out the graft polymerization onto the graft base (a3) in aqueous emulsion. It may be undertaken in the same system used for polymerizing the graft base, and further emulsifier and initiator may be added. These need not be identical with the emulsifiers and/or initiators used for preparing the graft base (a1). For example, it may be expedient to use a persulfate as initiator for preparing the graft base (a1) but a redox initiator system for polymerizing the graft shell (a4). Otherwise, that which was said for the preparation of the graft base (a3) is applicable to the selection of emulsifier, initiator and polymerization auxiliaries. The monomer mixture to be grafted on may be added to the reaction mixture all at once, in portions in more than one step-or, preferably, continuously during the polymerization.

In a preferred embodiment, the initiators preferred for the preparation of (a3) are used and no chain transfer agent is used in the preparation of (a4).

In step III of the process according to the invention component A is blended with one or more matrix polymers (B) and optionally other components (C) to (F). These are described below.

In a preferred embodiment, the component (A) is directly blended with component (B) without further work up. Of course it is also possible to isolate (A) and blend at a later stage.

Component (B) is a thermoplastic polymer and is present in the molding compositions according to the invention in a proportion of from 20 to 95% by weight, preferably from 30 to 90% by weight and particularly preferably from 40 to 85% by weight, based on the total of components (A) and (B), and, if present, further components (C) to (F).

Component (B) is obtained by polymerizing, based on (B),
b1) from 69 to 81 % by weight, preferably from 70 to 78% by weight and particularly preferably from 70 to 77% by weight, of at least one vinyl aromatic monomer,
b2) from 19 to 31 % by weight, preferably from 22 to 30% by weight and particularly preferably from 23 to 30% by weight, of acrylonitrile,
b3) from 0 to 30% by weight, preferably from 0 to 28% by weight, of at least one other monoethylenically unsaturated monomer.

Suitable vinyl aromatic monomers (b1) are styrene and styrene derivatives of the formula (I) as described for component (a41). Preference is given to the use of styrene and/or α-methyl styrene.

In a further preferred embodiment, component (B) consists of two polymers (B') and (B"). The polymer (B') here corresponds to the polymer (B) described above, where the vinyl aromatic monomers (b1') are only those of the formula (I) which have R¹ and R² as hydrogen, i.e. non-alkylated vinyl aromatics. Styrene is preferred as monomer (b1') in (B') (R² = H, n = 0).

The polymer (B") corresponds to the polymer (B) described above, where the vinyl aromatic polymers (b1") are only those of the formula (I) which have R¹ and R² as C₁-C₈-alkyl, i.e. alkylated vinyl aromatics. α-Methyl styrene is preferred as monomer (b1") in (B").

Polymer (B") is preferably an α-methyl styrene-acrylonitrile copolymer. If component (B) consists of two components (B') and (B"), it particularly preferably consists of a styrene-acrylonitrile copolymer (B') and an α-methyl styrene-acrylonitrile polymer (B").

If (B) consists of (B') and (B"), the ratio (B')/(B") is preferably from 99:1 to 1:99, preferably from 95:5 to 5:95.

Other possible monomers (b3) include the monomers mentioned earlier for component (a32). Particularly suitable monomers are methyl methacrylate and N-alkyl- and/or N-arylmaleimides, such as N-phenylmaleimide.

The polymers (B), which due to their main components styrene and acrylonitrile are generally also referred to as SAN (styrol-acryl nitrile) polymers, are known and in some cases also commercially available.

Component (B) has a viscosity number VN of from 50 to 120 ml/g, preferably from 52 to 110 ml/g and particularly preferably from 55 to 105 ml/g.

All viscosity numbers mentioned in this application are determined according to DIN 53 726 at 25°C on a 0.5% strength by weight solution of the respective material in dimethyl formamide.

Component (B) is obtained in a known manner by bulk, solution, suspension, precipitation or emulsion polymerization, bulk and solution polymerization being preferred. Details of these processes are described, for example, in Kunststoffhandbuch, ed. R. Vieweg and G. Daumiller, Vol. V "Polystyrol", Carl-Hanser-Verlag Munich, 1969, p. 118 ff.

In a preferred embodiment, the graft (a4) of the graft polymer (A2) consists essentially of, based on (a4),
a41) from 75 to 85% by weight of styrene and/or α-methyl styrene,
a22) from 15 to 25% by weight of acrylonitrile,
and the thermoplastic polymer (B) consists essentially of, based on (B),
b1) from 71 to 78% by weight of styrene, and
b2) from 22 to 29% by weight of acrylonitrile.

Component (C) is likewise a thermoplastic polymer and is present in the molding compositions according to the invention in a proportion of from 0 to 50% by weight, preferably from 0 to 48% by weight and particularly preferably from 0 to 45% by weight, based on the total of components (A) and (B), and, if present, (C), (D), (E) and (F).

Component (C) is obtained by polymerizing, based on (C),
c1) from 62 to 81 % by weight, preferably from 75 to 78% by weight and particularly preferably from 68 to 75% by weight, of at least one vinyl aromatic monomer,
c2) from 19 to 38% by weight, preferably from 22 to 35% by weight and particularly preferably from 25 to 32% by weight, of acrylonitrile, and
c3) from 0 to 40% by weight, preferably from 0 to 30% by weight, of at least one other monoethylenically unsaturated monomer.

Suitable vinyl aromatic monomers (c1) are styrene and styrene derivatives of the formula (I), as described for component (a21). The use of styrene is preferred. The other monomers (c3) may be the monomers mentioned earlier for components (a12). Particularly suitable monomers are methyl methacrylate, maleic anhydride and N-phenylmaleimide.

Component (C) has a viscosity number VN of from 50 to 120 ml/g, preferably from 52 to 110 ml/g and particularly preferably from 55 to 105 ml/g. It is generally obtained in a known manner by bulk, solution, suspension, precipitation or emulsion polymerization, bulk and solution polymerization being preferred. Details of these processes are given, for example, in Kunststoffhandbuch, ed. R. Vieweg and G. Daumiller, Vol. V "Polystyrol", Carl-Hanser-Verlag Munich, 1969, p. 118 ff.

Components (B) and (C) are polymers of the SAN type incorporating comparatively little acrylonitrile (not more than 31 % by weight). According to the invention, the difference between (B) and (C) is
either that the viscosity numbers VN of (B) and (C) differ by at least 5 units [ml/g] (in this case, the mean molar masses M of (B) and (C) are different from one another),
or that the acrylonitrile contents of (B) and (C) (monomers (b2) and (c2), respectively) differ by at least 5 units [% by weight],
or that both characteristics mentioned above, viscosity number VN and acrylonitrile content, differ by at least 5 units.

Component (D) is also a thermoplastic polymer and is present in the novel molding compositions in a proportion from 0 to 50% by weight, preferably from 0 to 40% by weight and in particular from 0 to 30% by weight, based on the total of components (A) and (B), and (C), (D), (E) and (F) if they are present. Component (D) is obtained by polymerizing, based on (D),
d1) from 4 to 96% by weight, preferably from 8 to 92% by weight, particularly preferable from 10 to 90% by weight, of at least one vinyl aromatic monomer,
d2) from 4 to 96% by weight, preferably from 8 to 92% by weight, particularly preferred from 10 to 90% by weight of at least one monomer selected from the class consisting of maleic anhydride, maleimides, C₁-C₂₀-alkyl acrylates and C₁-C₂₀ alkyl methacrylates,
d3) from 0 to 50% by weight, preferably from 0 to 42% by weight, particularly preferable from 0 to 30% by weight, of acrylonitrile.

Suitable vinyl aromatic monomers (d1) are styrene and styrene derivatives of the formula (I), as described for component (a41). Preference is given to the use of styrene and/or α-methyl styrene, particularly styrene. The other monomer (d3) may be the monomers mentioned earlier for component (a21). Particularly suitable monomers are methyl methacrylate, maleic anhydride, N-phenylmaleimide and other N-substituted maleimides.

Suitable vinylaromatic monomers (d1) are styrene and styrene derivatives of the formula (I), as described for (a41). Preference is given to the use of styrene and/or α-methylstyrene. Among the C₁-C₂₀-alkyl methacrylates (one of the monomers (d2)), preference is given to methyl methacrylate (MMA). Particularly preferable components (D) are copolymers of styrene and maleic anhydride or of styrene and maleimides, or of styrene, maleimides and MMA or of styrene, maleimides and acrylonitrile, or of styrene, maleimides, MMA and acrylonitrile.

According to the invention, the monomers (d1) to (d3) are selected so that the polymer (D) differs from the polymers (B) and, if it is also present in the molding compositions, (C). The polymers (E) can serve to increase the heat resistance of the thermoplastic molding compositions.

Component (D) generally has a viscosity number VN of from 50 to 120 ml/g, preferably from 55 to 110 ml/g. Component (D) is generally obtained in a known manner by bulk, solution, suspension, precipitation or emulsion polymerization. Details of these processes are described, for example, in Kunststoffhandbuch, ed. R. Vieweg and G. Daumiller, Vol. V "Polystyrol", Carl-Hanser-Verlag Munich 1969, p. 118 ff.

### Examples of component (E):

In addition to thermoplastic resins composed of vinyl monomers, it is also possible to use polycondensation products, for example aromatic polycarbonates, aromatic polyester carbonates, polyesters, polyamides, as the rubber-free copolymer in the molding compositions according to the invention.

Aromatic polycarbonate resins suitable for use as the polycarbonate resin component of the thermoplastic resin composition of the present invention are known compounds, whose preparation and properties have been described, see, generally, U.S. Pat. Nos. 3,169,121, 4,487,896 and 5,411,999.

Suitable aromatic polycarbonate resins include linear aromatic polycarbonate resins, branched aromatic polycarbonate resins. Suitable linear aromatic polycarbonates resins include, e.g., bisphenol A polycarbonate resin.

Suitable branched polycarbonates are known and are made by reacting a polyfunctional aromatic compound with a dihydric phenol and a carbonate precursor to form a branched polymer, see generally, U.S. Pat. Nos. 3,544,514, 3,635,895 and 4,001,184. The polyfunctional compounds are generally aromatic and contain at least three functional groups which are carboxyl, carboxylic anhydrides, phenols, haloformates or mixtures thereof, such as, for example, 1,1,1-tri(4-hydroxyphenyl)ethane, 1,3,5,-trihydroxybenzene, trimellitic anhydride, trimellitic acid, trimellityl trichloride, 4-chloroformyl phthalic anhydride, pyromellitic acid, pyromellitic dianhydride, mellitic acid, mellitic anhydride, trimesic acid, benzophenonetetracarboxylic acid, benzophenonetetracarboxylic dianhydride. The preferred polyfunctional aromatic compounds are 1,1,1-tri(4-hydroxyphenyl)ethane, trimellitic anhydride or trimellitic acid or their haloformate derivatives.

Copolyester-carbonate resins are also suitable for use as the aromatic polycarbonate resin component of the present invention. Copolyester-carbonate resins suitable for use as the aromatic polycarbonate resin component of the thermoplastic resin composition of the present invention are known compounds, whose preparation and properties have been described, see, generally, U.S. Pat. Nos. 3,169,121, 4,430,484 and 4,487,896.

The polycarbonates or polyester carbonates that are suitable may contain aromatically bonded halogen, preferably bromine and/or chlorine; preferably, they are halogen-free.

They have molecular weights (M_{w}, weight-average), determined, for example, by ultra-centrifugation or scattered light measurement, of from 10,000 to 200,000, preferably from 20,000 to 80,000.

Suitable thermoplastic polyesters are preferably polyalkylene terephthalates, that is to say reaction products of aromatic dicarboxylic acids or reactive derivatives thereof (e.g. dimethyl esters or anhydrides) and aliphatic, cycloaliphatic or arylaliphatic diols, and mixtures of such reaction products.

Preferred polyalkylene terephthalates may be prepared from terephthalic acids (or reactive derivatives thereof) and aliphatic or cycloaliphatic diols having from 2 to 10 carbon atoms according to known methods (Kunststoff-Handbuch, Volume VIII, p. 695 ff, Carl Hanser Verlag, Munich 1973).

In preferred polyalkylene terephthalates, from 80 to 100 mol %, preferably from 90 to 100 mol %, of the dicarboxylic acid radicals are terephthalic acid radicals, and from 80 to 100 mol %, preferably from 90 to 100 mol %, of the diol radicals are ethylene glycol and/or 1,4-butanediol radicals.

The preferred polyalkylene terephthalates may contain, in addition to ethylene glycol or 1,4-butanediol radicals, from 0 to 20 mol % of radicals of other aliphatic diols having from 3 to 12 carbon atoms or cycloaliphatic diols having from 6 to 12 carbon atoms, for example radicals of 1,3-propanediol, 2-ethyl-1,3-propanediol, neopentyl glycol, 1,5-pentanediol, 1,6-hexanediol, 1,4-cyclohexanedimethanol, 3-methyl-1,3- and 1,6-pentanediol, 2-ethyl-1,3-hexanediol, 2,2-diethyl-1,3-propanediol, 2,5-hexanediol, 1,4-di(β-hydroxyethoxy)-benzene, 2,2(bis-4-hydroxycyclohexyl)-propane, 2,4-dihydroxy-1,1,3,3-tetramethylcyclobutane, 2,2-bis-(3-β-hydroxyethoxyphenyl)-propane and 2,2-bis-(4-hydroxypropoxyphenyl)-propane (DE-A 2 407 647, 2 407 776, 2 715 932).

The polyalkylene terephthalates may be branched by incorporation of relatively small amounts of tri- or tetra-hydric alcohols or tri- or tetra-basic carboxylic acids, such as are described in DE-A 1 900 270 and U.S. Pat. No. 3,692,744. Examples of preferred branching agents are trimesic acid, trimellitic acid, trimethylol-ethane and -propane and pentaerythritol. It is advisable to use not more than 1 mol % of the branching agent, based on the acid component.

Particular preference is given to polyalkylene terephthalates that have been prepared solely from terephthalic acid and reactive derivatives thereof (e.g. dialkyl esters thereof) and ethylene glycol and/or 1,4-butanediol, and mixtures of such polyalkylene terephthalates.

Preferred polyalkylene terephthalates are also copolyesters prepared from at least two of the above-mentioned alcohol components: particularly preferred copolyesters are poly-(ethylene glycol 1,4-butanediol) terephthalates.

The polyalkylene terephthalates that are preferably suitable generally have an intrinsic viscosity of from 0.4 to 1.5 dl/g, preferably from 0.5 to 1.3 dl/g, especially from 0.6 to 1.2 dl/g, in each case measured in phenol/o-dichlorobenzene (1:1 parts by weight) at 25°C.

Suitable polyamides are known homopolyamides, copolyamides and mixtures of such polyamides. They may be semi-crystalline and/or amorphous polyamides.

Suitable semi-crystalline polyamides are polyamide-6, polyamide-6,6, mixtures and corresponding copolymers of those components. Also included are semi-crystalline polyamides the acid component of which consists wholly or partially of terephthalic acid and/or isophthalic acid and/or suberic acid and/or sebacic acid and/or azelaic acid and/or adipic acid and/or cyclohexanedicarboxylic acid, the diamine component of which consists wholly or partially of m- and/or p-xylylene-diamine and/or hexamethylenediamine and/or 2,2,4-trimethylhexamethylenediamine and/or 2,2,4-trimethylhexamethylenediamine and/or isophoronediamine, and the composition of which is in principle known.

Mention may also be made of polyamides that are prepared wholly or partially from lactams having from 7 to 12 carbon atoms in the ring, optionally with the concomitant use of one or more of the above-mentioned starting components.

Particularly preferred semi-crystalline polyamides are polyamide-6 and polyamide-6,6 and mixtures thereof. Known products may be used as amorphous polyamides. They are obtained by polycondensation of diamines, such as ethylenediamine, hexamethylenediamine, decamethylenediamine, 2,2,4- and/or 2,4,4-trimethylhexamethylenediamine, m- and/or p-xylylene-diamine, bis-(4-aminocyclohexyl)-methane, bis-(4-aminocyclohexyl)-propane, 3,3'-dimethyl-4,4'-diamino-dicyclohexylmethane, 3-aminomethyl-3,5,5-trimethylcyclohexylamine, 2,5- and/or 2,6-bis-(aminomethyl)-norbornane and/or 1,4-diaminomethylcyclohexane, with dicarboxylic acids such as oxalic acid, adipic acid, azelaic acid, azelaic acid, decanedicarboxylic acid, heptadecane-dicarboxylic acid, 2,2,4- and/or 2,4,4-trimethyladipic acid, isophthalic acid and terephthalic acid.

Also suitable are copolymers obtained by polycondensation of a plurality of monomers, as well as copolymers prepared with the addition of aminocarboxylic acids such as ε-aminocaproic acid, ω-aminoundecanoic acid or ω-aminolauric acid or their lactams.

Particularly suitable amorphous polyamides are the polyamides prepared from isophthalic acid, hexamethylenediamine and further diamines such as 4,4'-diaminodicyclohexylmethane, isophoronediamine, 2,2,4- and/or 2,4,4-trimethylhexamethylenediamine, 2,5- and/or 2,6-bis-(aminomethyl)-norbornene; or from isophthalic acid, 4,4'-diamino-dicyclohexylmethane and ε-caprolactam; or from isophthalic acid, 3,3'-dimethyl-4,4'-diamino-dicyclohexylmethane and laurinlactam; or from terephthalic acid and the isomeric mixture of 2,2,4- and/or 2,4,4-trimethylhexamethylenediamine.

Instead of pure 4,4'-diaminodicyclohexylmethane it is also possible to use mixtures of the position-isomeric diaminodicyclohexylmethanes, which are composed of
from 70 to 99 mol % of the 4,4'-diamino isomer
from 1 to 30 mol % of the 2,4'-diamino isomer
from 0 to 2 mol % of the 2,2'-diamino isomer and
optionally corresponding to more highly condensed diamines, which are obtained by hydrogenation of industrial grade diaminodiphenylmethane. Up to 30% of the isophthalic acid may be replaced by terephthalic acid.

The polyamides preferably have a relative viscosity (measured on a 1 wt. % solution in m-cresol at 25°C) of from 2.0 to 5.0, particularly preferably from 2.5 to 4.0.

Examples of other polymers suitable as component (E) of the molding compositions used according to the invention are partly crystalline polyolefins, preferably homo- and copolymers of olefins such as ethylene, propylene, 1-butene, 1-pentene, 1-hexene, 1-heptene, 3-methyl-1-butene, 4-methyl-1-butene, 4-methyl-1-pentene and 1-octene. Suitable polyolefins are polyethylene, polypropylene, poly-1-butene and poly-4-methyl-1-pentene. Under polyethylene (PE) a distinction is made in general between high-density PE (HDPE), low-density PE (LDFE) and linear low-density PE (LLDPE).

In another embodiment of the invention ionomers are component (E). These are generally polyolefins as described above, in particular polyethylene, which comprise copolymerized monomers with acid groups, e.g. acrylic acid, methacrylic acid and, where appropriate, other copolymerizable monomers. The acid groups are generally converted with the aid of metal ions, such as Na⁺, Ca²⁺, Mg²⁺ and Al³⁺ into ionic, where appropriate ionically cross linked, polyolefins which, however, can still be processed thermoplastically (see, for example, U.S. Pat. Nos. 3,264,272; 3,404,134; 3,355,319 and 4,321,337). However, the conversion of the polyolefins containing acid groups by the use of metal ions is not essential. Polyolefins containing free acid groups are also suitable as component B according to the invention. These then generally have rubbery character and to some extent comprise yet other copolymerizable monomers, e.g. (meth)acrylates.

Polyether ketones, for example as described in the publications GB 1 078 234, U.S. Pat. No. 4,010,147, EP-A-0 135 938, EP-A-0 292 211, EP-A-0 275 035, EF-A-0 270 998 and EP-A-0 165 406, and in the publication by C. K. Sham et al., Polymer 29/6, (1988), 1016-1020, may also be used as component E.

Polyoxyalkylenes, e.g. polyoxymethylene, and oxymethylene polymers may also be used as component E of the molding compositions.

Other polymers suitable as component (E) are polyarylene sulfides, in particular polyphenylene sulfide.

Component (F) consists of additives which are present in the novel thermoplastic molding compositions in a proportion of from 0 to 50% by weight, preferably from 0.1 to 45% by weight and particularly preferably from 0.2 to 30% by weight, based on the total of components (A), (B) and (C), (D) and (E) if they are present.

Component (F) includes lubricants or mold-release agents, waxes, pigments, dyes, flame retardants, antioxidants, stabilizers to counter the action of light, fibrous and pulverulent fillers, fibrous and pulverulent reinforcing agents, antistatics and other additives, or mixtures of these.

Representative examples of the lubricants include metal soap, such as calcium stearate, magnesium stearate, zinc stearate, and lithium stearate, ethylene-bis-stearamide, methylene-bis-stearamide, palmityl amide, butyl stearate, palmityl stearate, polyglycerol tristearate, n-docosanoic acid, stearic acid, polyethylene- polypropylene wax, octacosanoic acid wax, Carnauba wax, montan waxes and petroleum wax. The amount of the lubricants is generally 0.03 to 5.0 wt %, based on the total amount of the rubber-modified styrenic resin composition.

Examples of pigments are titanium dioxide, phthalocyanines, ultramarine blue, iron oxides and carbon black, and the entire class of organic pigments.

For the purposes of the invention, dyes are all dyes which can be used for the transparent, semitransparent or non-transparent coloration of polymers, in particular those which are suitable for coloration of styrene copolymers. Dyes of this type are known to the person skilled in the art.

Representative examples of the flame retardant or its synergistic additives include decabromo-diphenyl ether, tetrabromo-bisphenol A, brominated-polystyrene oligomer, bromoepoxy resin, hexabromocyclododecane, chloropolyethylene, triphenyl phosphate, red phosphorous, antimony oxide, aluminium hydroxide, magnesium hydroxide, zinc borate, melamine-isocyanate, phenol resin, silicone resin, polytetrafluoroethylene and expanding graphite.

Particularly suitable antioxidants are sterically hindered mono- or polynuclear phenolic antioxidants, which may be substituted in various ways and also bridged via substituents. These include not only monomeric but also oligomeric compounds, which may be built up from more than one fundamental phenol unit. Hydroquinones and substituted compounds which are hydroquinone analogs are also suitable, as are antioxidants based on tocopherols and their derivatives. Mixtures of different antioxidants may also be used. Examples of the antioxidants are phenolic antioxidants, thio-ether antioxidants, phosphorous-based antioxidants and chelating agents. The phenolic antioxidants are preferably added in an amount of 0.005 to 2.0 wt %. Representative examples of the phenolic antioxidants include octadecyl (3,5-di-tert-butyl-4-hyroxyphenyl) propionate, tri-ethylene glycol-bis>3-(3-tert-butyl-5-methyl-4-hydroxyphenyl)propionate, pentaerythritol-tetrakis->3-(3,5-di-tert-butyl-4-hydroxyphenyl) propionate, 2-tert-butyl-6-(3-tert-butyl-2-hydroxy-6-methylbenzyl)-4-methy phenyl acrylate, 2,2'-methylene-bis-(4-methyl-6-tert-butyl phenol), butylated reaction product of p-cresol and dicyclopentadiene, 2,2'-thio-bis-(4-methyl-6-tert-butyl phenol), 2,2'-thio-diethylene-bis[3(3,5-di-tert-butyl-4-hydroxy-phenyl) propionate], and 2,2'-ethylene diamide-bis[ethyl-3-(3,5-di-tert-butyl-4-hydroxy-phenyl) propionate].

In principle, it is possible to use any compound which is commercially available or suitable for styrene copolymers, such as Topanol® (Rutherford Chemicals, Bayonne, NJ, USA), Irganox^{®} (Ciba Specialty Chemicals, Basel, Switzerland) or Wingstay^{®} (Eliokem, Villejust, France).

Alongside the phenolic antioxidants mentioned as examples above, it is possible to use co stabilizers, in particular phosphorus- or sulphur-containing co stabilizers.

The thio-ether antioxidants are preferably added in an amount of 0.005 to 2.0 wt %. The phosphorous-based antioxidants include phosphite, phosphate, phosphonite and phosphonate antioxidants. The phosphorous-based antioxidants are preferably added in an amount of 0.015 to 2.0 wt %. Representative examples of the phosphorous antioxidants are tris(nonylphenyl) phosphite, tris(2,4-di-t-butylphenyl)phosphite, triisodecyl phosphite, distearyl pentaerithritol di-phosphite, triphenyl phosphite, diphenyl isodecyl phosphite, tris(isotridecyl) phosphite, tetraphenyl dipropylene glycol, diphosphite, distearyl hydrogen phosphite, diphenyl phenyl phosphonate, tetrakis (2,4-di-tert-butyl phenyl)4,4'-biphenylene di phosphonite.

Representative examples of the thio-ether antioxidants include distearyl thio-dipropionate, dipalmityl thio-dipropionate, dilauryl thio-dipropionate, pentaerythritol-tetrakis-(β-dodecylmethyl-thiopropionate) and dioctadecyl thioether.

Such phosphorus- or sulphur-containing co stabilizers are known to the person skilled in the art and are commercially available.

Representative examples of the heat stabilizer include dibutyl tin maleate and basic magnesium aluminium hydroxy carbonate. A low molecular styrene-maleic anhydride copolymer can also serve as a heat stabilizer to prevent thermal discoloring. The amount of the heat stabilizer is in generally 0.1 to 1.0 wt %, based on the total amount of the rubber modified styrenic resin composition.

Examples of suitable stabilizers to counter the action of light are various substituted resorcinols, salicylates, benzotriazoles, benzophenones and HALS (hindered amine light stabilizers), commercially available, for example, as Tinuvin^{®} (Ciba Specialty Chemicals, Basel, Switzerland). The amount of the preceding additives is generally 0.02 to 2.0 wt % based on the total amount of the rubber-modified styrenic resin composition.

Examples of fibrous and/or particulate fillers are carbon fibers or glass fibers in the form of glass fabrics, glass mats or glass fiber rovings, chopped glass or glass beads, and wollastonite, particularly preferably glass fibers. If glass fibers are used, these may be provided with a size and a coupling agent for better compatibility with the blend components. The glass fibers may be incorporated either in the form of short glass fibers or in the form of continuous strands (rovings).

Suitable particulate fillers are carbon black, amorphous silicic acid, magnesium carbonate, chalk, powdered quartz, mica, bentonites, talc, feldspar or in particular calcium silicates, such as wollastonite, and kaolin.

Chelating agents can preferably be added in an amount of 0.001 to 2.0 wt %. Representative examples of the chelating agent include 2,2'-oxamido-bis-[ethyl 3-(3,5-di-tert-butyl-4-hydroxyphenyl)propionate], the sodium salt of ethylene diamine tetra acetic acid, amino tri(methylene phosphonic acid), 1-hydroxy ethylidene(1,1-diphosphonic acid), ethylene diamine tetra(methylene phosphonic acid), hexamethylene diamine tetra(methylene phosphonic acid) and diethylene triamine penta(methylene phosphonic acid).

A processing aid, such as methyl methacrylate-based copolymer, may be added to improve the extrusion and thermoforming. In addition, silicone oils, oligomeric isobutylene or similar materials are suitable for use as additives. If used, the usual concentrations thereof are from 0.001 to 5% by weight.

Details concerning the preparation of the thermoplastic molding compositions are as follows:

The graft polymers having bimodal particle size distribution are prepared by emulsion polymerization, as described above for component (A2). As described above, suitable measures are taken in order to establish the bimodal particle size distribution, preference being given to (partially) agglomerating the polymer particles, as mentioned, by adding a polyacrylate dispersion which has agglomerating effect. Instead of this, or combined with the (partial) agglomeration, it is possible to use other suitable measures familiar to the person skilled in the art to establish the bimodal particle size distribution.

Component (A), the resultant dispersion of the components (A1) and (A2) is preferably worked up prior to the mixing with the components (B) to (F).

The dispersion of component (A) is generally worked up in a manner known per se. E.g., component (A) is firstly precipitated from the dispersion, for example by adding acids (such as acetic acid, hydrochloric acid or sulphuric acid) or salt solutions (such as calcium chloride, magnesium sulphate or alum) which can bring about precipitation, or else by freezing (freeze coagulation). The aqueous phase may be removed in a usual manner, for example by screening, filtering, decanting or centrifuging. This preliminary removal of the dispersion water gives polymers (A) which are moist with water and have a residual water content of up to 60% by weight, based on (A), where the residual water may, for example, either adhere externally to the polymer or else be enclosed within it.

After this, the polymer may, if required, be dried in a known manner, for example by hot air or using a pneumatic dryer. It is likewise possible to work up the dispersion by spray drying.

In a preferred embodiment, where the salt of the amphiphilic polymer is the ammonium salt of an alternating styrene maleic anhydride (SMA) copolymer, the ammonium salt is decomposed in this drying step to form an amide, and upon further heating to temperatures of 100°C and higher an imide.

The thermoplastic molding composition (G) is produced by mixing components (A), (B) and, optionally, (C), (D), (E) and (F) according to methods well known to those skilled in the art.

Mixing can be carried out by any known method and in any desired manner.

Preferably mixing is carried out in a mixing apparatus.

If one or more components are incorporated in the form of an aqueous dispersion or of an aqueous or non-aqueous solution, the water or the solvent is removed from the mixing apparatus, preferably an extruder, by a devolatilizing unit.

Examples of mixing apparatuses are discontinuously operating heated internal mixers with or without rams, continuously operating kneaders, such as continuous internal mixers, screw compounders having axially oscillating screws, Banbury mixers, and also extruders, roll mills, mixing rolls where the rolls are heated and calenders.

Preference is given to using an extruder as mixing apparatus. Single- or twin-screw extruders, for example, are particularly suitable for extruding the melt. A twin-screw extruder is preferred.

Blending of the components is preferably carried out by co extruding, kneading or roll-milling the components at temperatures of, preferably, from 180 to 400°C.

In a preferred embodiment the mixing of only components (A), (B) and (E) is carried out by co extruding, kneading or roll-milling the components at temperatures of, preferably, from 180 to 400°C.

The so obtained granulate is then mixed with component (C) and if present (D) and (E) to produce molding compositions (F). The compounding may be carried out by any known method and in any desired manner. However, blending of the components is preferably carried out by co extruding, kneading or roll-milling the components at temperatures of, preferably, from 180 to 400°C.

In a preferred embodiment, the process according to the invention comprises mixing component (A) with the polymer (B) and any other components, if they are present, in a mixing apparatus, giving an essentially molten polymer mixture; and rapidly cooling of the essentially molten polymer mixture over a period of from 0.1 to 10 sec.

The molding compositions can be processed to shaped articles, films or fibers.

According to one embodiment of the invention, these can be prepared from molding compositions (G), by known methods of processing thermoplastics. In particular, production may be effected by thermoforming, extruding, injection molding, calendaring, blow molding, pressing, pressure sintering, deep drawing or sintering, preferably by injection molding.

As a result of the inventive process, a CNT reinforced polymer is formed where the CNTs are well dispersed in the molding composition (F), "well dispersed" meaning that the CNTs are substantially homogeneously distributed (i.e., allowing for a 1 to 20 percent, preferably 1 to 5 percent inhomogeniety in certain regions of the matrix) in the matrix without phrase separation. Preferably, a majority of the well dispersed CNTs are not bundled together. Preferably, about 60%, more preferably about 80%, most preferably about 90% of the well-dispersed CNTs are not bundled together.

The process of the invention results in a CNT reinforced composition (G), wherein the properties of the CNTs used are retained to a large extent: the CNTs are hardly or not damaged, as a result of which they retain their original length as well as their original aspect ratio (AR) (ratio of length to diameter of the CNTS). The CNTs are essentially individually dispersed in the polymer matrix. The polymer therefore has improved stiffness as well as better conductivity properties.

With the process of the invention, molding compositions (G) are obtainable having a conductivity percolation threshold at or below 0.4 wt.%, preferably below 0.2 wt.%, more preferred between 0.001 wt.% and 0.1 wt.%. In particular, the process of the invention results in a product that has a resistivity of less than 10⁶ Ω/cm at a CNT content of less than 0.1 %.

The CNT reinforced molding composition (G) generally has a Relative Size Dimension (RSD) of the nanotubes incorporated therein of between 0.85 and 1.0, wherein the RSD is the ratio between the AR of the nanotubes in the reinforced polymer, and the AR of the virgin nanotubes (the CNTs used as starting material). Preferably, the CNT reinforced polymer of the present invention has an RSD of at least 0.9.

The molded articles prepared from molding compositions (G) can be used for several applications in which the improved stiffness, glass transition temperature and conductivity properties can be exploited. Reference can be given to shielding applications (like electromagnetic interference shielding); high modulus conducting body panels for the automotive industry with a better surface appearance than glass fiber filled polymers; nano-electric devices (such as thin-film transistors), and others.

## Claims

1. A carbon nanotube (CNT) reinforced thermoplastic molding composition (G), comprising components (A) to (F),
A) from 5 to 80 % by weight of a mixture of
A1) from 0.1 to 50 % by weight (based on A)) of a mixture of
a1) 4.75 to 95.25 % by weight (based on (A1)) of CNTs, and
a2) 95.25 to 4.75 % by weight (based on (A1) of a salt of a water soluble amphiphilic polymer,
and
A2) from 50 to 99.9 % by weight (based on (A)) of a graft polymer (A2) having bimodal particle size distribution made from, based on (A2)
a3) from 40 to 90% by weight of an elastomeric particulate graft base (a3), obtained by polymerization of, based on (a3),
a31) from 70 to 100% by weight of at least one conjugated diene, or of at least one C₁-C₈-alkyl acrylate, or of a mixture of these,
a32) from 0 to 30% by weight of at least one other monoethylenically un saturated monomer and
a33) from 0 to 10% by weight of at least one polyfunctional, cross linking monomer;
a4) from 10 to 60% by weight of a graft (a4) made from, based on (a4),
a41) from 65 to 95% by weight of at least one vinyl aromatic monomer,
a42) from 5 to 35% by weight of acrylonitrile,
a43) from 0 to 30% by weight of at least one monoethylenically unsaturated monomer, and
a44) from 0 to 10% by weight of at least one polyfunctional, cross linking monomer;
B) from 20 to 95% by weight of a thermoplastic polymer (B) having a viscosity number VN of from 50 to 120 ml/g, made from, based on (B),
b1) from 64 to 81 % by weight of at least one vinyl aromatic monomer,
b2) from 19 to 36% by weight of acrylonitrile, and
b3) from 0 to 30% by weight of at least one other monoethylenically unsaturated monomer;
C) from 0 to 50% by weight of a thermoplastic polymer (C) having a viscosity number VN of from 50 to 120 ml/g made from, based on (C),
c1) from 62 to 81 % by weight of at least one vinyl aromatic monomer,
c2) from 19 to 38% by weight of acrylonitrile, and
c3) from 0 to 30% by weight of at least one other monoethylenically unsaturated monomer,
where components (B) and (C) differ in their viscosity numbers VN by at least 5 units (ml/g), or in their acrylonitrile content by at least 5 units (% by weight) or in both characteristics, viscosity number VN and acrylonitrile content, by at least 5 units and
D) from 0 to 50% by weight of a thermoplastic polymer (D) made from, based on (D),
d1) from 4 to 96% by weight of at least one vinyl aromatic monomer,
d2) from 4 to 96% by weight of at least one monomer from the group consisting of methyl methacrylate, maleic anhydride and maleimides, and
d3) from 0 to 50% by weight of acrylonitrile where (D) is different from (B) and (C) if present;
E) from 0 to 80% by weight of amorphous or (semi)-crystalline polymers, and
F) from 0 to 50% by weight of additives (F).

2. The molding composition (G) as claimed in claim 1, wherein component (a1) comprises single wall CNTs (SWCNTs).

3. The molding composition (G) as claimed in claim 1 or 2, where the amphiphilic polymer is a synthetic polymer obtained from hydrophilic and hydrophobic monomers.

4. The molding composition (G) as claimed in one of claims 1 to 3, where the hydrophobic block of the amphiphilic polymer (a2) is made from vinyl aromatic monomers from the group consisting of styrene, styrene derivatives of formula (I), 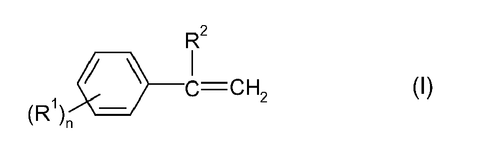 where R¹ and R² are independently H or C₁-C₈-alkyl and n is 0, 1 or 2,
C₁-C₁₀-alkylacrylates, C₁-C₁₀-alkyl methacrylates, hydroxyethyl acrylates, aromatic acrylates, aromatic methacrylates, araliphatic acrylates and araliphatic methacrylates.

5. The molding composition (G) as claimed in one of claims 1 to 4, where the hydrophilic block of the amphiphilic polymer (a2) is made from acrylic acid, methacrylic acid, dicarboxylic acids and the anhydrides of these acids.

6. The molding composition (G) as claimed in claim 5, where the anhydride is maleic anhydride.

7. The molding composition (G) as claimed in one of claims 1 to 6, where the salt of the amphiphilic polymer (A) is partly or homogeneously miscible with polymer (B).

8. The molding composition (G) as claimed in one of claims 1 to 7, where the salt of the amphiphilic polymer (A) is an ammonium salt.

9. The molding composition (G) as claimed in claim 8, where the salt of the amphiphilic polymer (a2) is the ammonium salt of a styrene maleic anhydride copolymer.

10. The molding composition (G) as claimed in one of claims 1 to 9, where the conjugated diene (a31) is butadiene.

11. The molding composition (G) as claimed in one of claims 1 to 10, where the bimodal particle size distribution of the graft polymer (A2) has two maxima, at the weight average particle size from 25 to 200 nm on the one hand and from 150 to 800 nm on the other hand, and the weight ratio of the first population is from 5 to 60% and the weight ratio of the second population from 95 to 40%.

12. The molding composition (G) as claimed in one of claims 1 to 11, where the conductivity percolation threshold is at or below 0.4 wt.% of carbon nanotubes

13. A process for producing a CNT reinforced thermoplastic molding composition (G), comprising the steps of
I. obtaining an aqueous dispersion of (A1) by contacting CNTs in an aqueous medium with a water soluble salt of an amphiphilic polymer;
II. obtaining component (A) by preparing an aqueous latex of a graft polymer (A2) having a bimodal size distribution and comprising (based on the total weight of A2):
40 to 90% by weight of a graft base (a3) and
10 to 60% by weight of a graft (a4)
by
i. emulsion-polymerizing, based on the total weight of (a3)
a31) from 70 to 100% by weight of at least one conjugated diene, or of at least one C₁-C₈-alkyl acrylate, or of a mixture of these,
a32) from 0 to 30% by weight of at least one other monoethylenically unsaturated monomer, and
a33) from 0 to 10% by weight of at least one polyfunctional, cross linking monomer, and
ii. graft copolymerizing in the presence of (a3)
a41) from 65 to 95% by weight (based on (a4)) of one or more vinyl aromatic monomer,
a42) from 5 to 35% by weight of acrylonitrile,
a43) from 0 to 30% by weight of at least one other monoethylenically unsaturated monomer, and
a44) from 0 to 10% by weight of at least one polyfunctional, cross linking monomer,
where either step (i) or step (ii) or both are carried out in the presence of the aqueous dispersion of (A1);
III. mixing 5 to 95% by weight (based on the total (G) of (A) with
B) from 20 to 95% by weight (based on the total TMC) of a thermoplastic polymer (B) having a viscosity number VN of from 50 to 120 ml/g, made from, based on (B),
b1) 64 to 81 % by weight of at least one vinyl aromatic monomer,
b2) 19 to 36% by weight of acrylonitrile, and
b3) 0 to 30% by weight of at least one other monoethylenically unsaturated monomer, and
optionally further thermoplastic polymers (C) to (E) and/or additives (F).

14. The process as claimed in claim 13, where the bimodal particle size distribution of the graft polymer (A2) is achieved by agglomerating the polymer particles.

15. The process as claimed in one of claims 13 or 14, where the graft (a4) is built up in two steps of different monomer make-up.

16. The process as claimed in one of claims 13 to 15, where component (A) is precipitated from the dispersion, by adding acids or salt solutions which bring about precipitation, or by freeze coagulation.

17. The process as claimed in one of claims 13 to 16, comprising the steps of
III. mixing component (A) with the polymer (B) and components (C) to (F), if they are present, in a mixing apparatus, giving an essentially molten polymer mixture; and
IV. rapidly cooling of the essentially molten polymer mixture over a period of from 0.1 to 10 sec.

18. A CNT reinforced thermoplastic molding composition obtainable by a process as claimed in one of claims 13 to 17.

19. The use of a composition (G) as claimed in one of claims 1 to 12 or 18 for producing a mold.

20. A molding produced from a composition (G) as claimed in one of claims 1 to 12 or 18.
